Europäisches Patentamt

(19) European Patent Office

Office européen des brevets

(11) Publication number: **0 256 247 B1**

(12) **EUROPEAN PATENT SPECIFICATION**

(45) Date of publication of patent specification:
04.09.91 Bulletin 91/36

(21) Application number: **87108725.0**

(22) Date of filing: **16.06.87**

(51) Int. Cl.⁵: **B60C 11/06**

(54) Pneumatic radial tire for heavy-duty road vehicle.

(30) Priority: **19.08.86 JP 125512/86 U**

(43) Date of publication of application:
**24.02.88 Bulletin 88/08**

(45) Publication of the grant of the patent:
**04.09.91 Bulletin 91/36**

(84) Designated Contracting States:
**DE FR GB**

(56) References cited:
**EP-A- 0 160 541
FR-A- 2 438 551
GB-A- 2 053 817
GB-A- 2 170 153
US-A- 4 078 596
US-E- 30 527**

(73) Proprietor: **Bridgestone Corporation
10-1, Kyobashi 1-Chome Chuo-Ku
Tokyo 104 (JP)**

(72) Inventor: **Mineki, Eiji
5-9-409, Ogawahigashimachi 3-chome
Kodaira-shi Tokyo (JP)**
Inventor: **Takahashi, Hidenori
555-86, Kamihirose
Sayama-shi Saitama-ken (JP)**
Inventor: **Wajima, Hiroki
23-8, Honcho 4-chome
Kokubunji-shi Tokyo (JP)**

(74) Representative: **Patentanwälte Grünecker,
Kinkeldey, Stockmair & Partner
Maximilianstrasse 58
W-8000 München 22 (DE)**

## Description

## BACKGROUND OF THE INVENTION

### Field of the Invention

The present invention relates to a pneumatic radial tire for heavy-duty road vehicles such as trucks, buses, etc., and more specifically to a tread pattern of the radial tire formed with ribs extendind in the tire substantially circumferential direction on both side ribs of the tread. The tires of this type can improve rib tear resistance and tire abrasion resistance especially when mounted on front wheels of vehicles or wheels of trailers.

### Description of the Prior Art

Conventionally, in the pneumatic radial tire for heavy-duty load vehicles available on an express way, tread is divided into a plurality of circumferential ribs by a plurality of wide main grooves extending in the tire circumferential direction; and the ribs, in particular the ribs arranged on both sides of the tread are formed continuously.

When the tires of this kind are mounted on vehicle front wheels or trailer wheels, there exists such an uneconomical problem as step-down abrasion, namely the tread is not uniformly worn away, because the ribs on both the sides of the tread are easily worn out as compared with the ribs in the tread middle area.

In addition, since ribs are worn more on both side ribs of the tread than at the middle, the early-stage abrasion gives rise to various irregular abrasions as follows:

(a) edge abrasion such that the outer edges of both the side ribs of the tread are worn out at early stage along the circumferential direction in a straight line.

(b) undulate abrasion such that non-uniform growth of the edge abrasion extends in the circumferential direction on the outer ribs and results in undulation on the outer ribs.

(c) shoulder abrasion such that growth of the undulate abrasion results in an early abrasion at broad areas on both sides of the tread.

(d) polygonal abrasion such that undulate abrasion results in polygonal abrasion on the tread surface as a whole when undulate abrasion extends to the ribs at the middle of the tread beyond the main grooves.

To prevent the above various irregular abrasions, various proposals have conventionally been made. By way of example, a plurality of sipes are arranged along the circumferential direction so as to extend in the radial direction mainly on the ribs of both the tread ends; or the tread is formed into a truncated conical shape by cutting off both the side ends of the tread in taper shape.

The above prior-art proposals exert some advantges. However, there still exist various problems as: under severe travel conditions where irregular abrasion is readily produced as when the tires are used along curved roads, shoulder abrasion including undulate abrasion develops to an extent as being not negligible, so that the tread width in contact with ground is decreased, resulting in short tire life and poor steering stability, in particular when the vehicle is travelling on a straight road.

In addition, no countermeasures against cracks produced at groove bottoms and rib tear caused by the growth of cracks have been taken.

As a result of various studies for reducing irregular abrasion, the inventors have found that: in the tire disclosed by the same applicant in GB-A-2170153, which corresponds to the preamble of claim 1 and to Japanese Unexamined Published Pat. Appl. No. 61-143205 (in which ribs extending in the circumferential direction on both side ribs of the tread are divided by narrow grooves having a width wider to such an extend that the rib side walls are brought into contact with each other when the tire is rotating under a heavy load), shoulder abrasion develops only in the outermost ribs arranged outside in the tire axial direction and further no shoulder abrasion develops at the entire circumferential ribs arranged at the middle of the tread, so that the disclosed tire is effective as tires provided with resistance against irregular abrasion; that is, it is possible to prevent the influence of the shoulder abrasion from spreading to the ribs formed at the tire middle portion.

The above-mentioned tread pattern has a function to suppress the spreading of irregular abrasion, because the rigidity of the outer ribs are intentionally lowered to concentrate the irregular abrasion only at the outer ribs. However, since only the outer ribs are worn away, there still exists a problem such that the narrow grooves are extremely decreased in height or worn out due to severe irregular abrasion at the middle stage of the tread abrasion and further the suppression function of the irregular abrasion toward the rib middle area are degraded so that the tread abrasion life is shortened.

Further, when the tire is rotating at high speed under severe travel conditions such that the tire is rotating along a road of many curves and a strong side force is applied to the outer ribs, there exists a danger such that cracks are produced at the bottoms of the narrow grooves and therefore rib tear trouble may arise when the tire runs over curbs, for instance.

In addition, the ribs arranged on the tread ends are worn away earlier than at the middle ribs. In other words, the step-down abrasion phenomenon such that the degree of abrasion is steppedly decreased from the side ribs of the read toward the middle ribs of the tread still exists, so that when the tread outer grooves are perfectly worn away, the tread middle grooves still remain.

This step-down abrasion results from a tire original structure such that there exists a difference in tire outer diameter between the tread middle ribs and the tread end ribs, the difference being increased from the tread middle to the tread ends.

## SUMMARY OF THE INVENTION

With these problems in mind, therefore, it is the primary object of the present invention to provide a radial tire for heavy-duty load vehicles, which can increase tire rib-tear resistance, tread abrasion resistance, and therefore tire abrasion life.

To achieve the above-mentioned object a pneumatic radial tire for heavy-duty road vehicle according to the present invention comprises the features recited in claim 1, particularly a plurality of main grooves extending substantially in the tire circumferential direction, a plurality of ribs partitioned by the main grooves, and two narrow grooves arranged within a range of 10 to 50% of an outer rib width 20W from each tread end and extending also substantially in the tire circumferential direction, at least one of said two narrow grooves is inclined toward the tread center at an angle with respect to a normal built up at an opening portion on the tread surface in cross section including the tire rotational axis, and the depth of said narrow groove is greater than the maximum depth of said main grooves.

Preferably, the inclination angle $\theta$ is 10 degrees or less. The depth of the main groove is determined so as to increase from the central main groove to the outermost main groove, but smaller than that of the narrow groove. Further, it is also possible to continuously form the narrow groove along the outside of tread of the tire and to intermittently form the narrow groove along the inside end of tread of the tire when the tire is mounted on a vehicle.

## BRIEF DESCRIPTION OF THE DRAWINGS

The features and advantages of pneumatic radial tire for heavy-duty road vehicle according to the present invention will be more clearly appreciated from the following description taken in conjunction with the accompanying drawings in which like reference numerals designate the same or similar elements or sections throughout the figures thereof and in which:

Fig. 1 is a development elevational view showing a half tread pattern of a first embodiment of the tire according to the present invention;

Fig. 2 is a cross-sectional view taken along the line II-II shown in Fig. 1;

Fig. 3 is a development elevational view showing a half tread pattern of a second embodiment of the tire according to the present invention; and

Fig. 4 is a cross-sectional view taken along the line IV-IV in Fig. 3.

## DETAILED DESCRIPTION OF THE PREFERRED EMBODIMENTS

In the drawings, the symbols $E_1$ and $E_2$ denote pneumatic radial tires for heavy-duty load vehicles according to the present invention. The tread T is divided into ribs 20c and 20u extending in the tire circumferential direction by a plurality of wide main groove $10_1$ and $10_2$ also extending the tire circumferential direction, and further a narrow circumferential groove 30 is arranged within a range of 10 to 50% of a width 20w of the outer rib 20u plus 20o on both sides of the tread T.

In the present invention, the narrow groove 30 is formed being inclined inward (toward the tread center) at an angle $\theta$ of 10 degrees or less with respect to the normal N built up at the groove opening portion $30_1$ on the tread surface in a cross section including the tire rotational axis, so that the rigidity of the rib 20u increases toward the bottom of the narrow groove $30_2$. Further, the depth 30d of the narrow groove 30 is deeper than that $10d_1$ and $10d_2$ of the main groove $10_1$ and $10_2$ and the main grooves 10 are formed in such a way that the depth $10d_2$ of the outer main groove $10_2$ is deeper than that $10d_1$ of the inner main groove $10_1$.

Since the narrow groove 30 is cut off being inclined inward at an angle of 10 degrees or less, preferably 5 degrees or less with respect to the tread surface normal N at the groove opening portion $30_1$, it is possible to increase the rigidity of the outermost rib 20o on the tread end Tc partitioned by the narrow groove $30_1$.

Therefore, it is possible to increase the depth 30d of the narrow groove 30 without decreasing the rigidity of the outermost rib 20o, that is, without reducing rib tear resistance of the outermost rib 20o on the tread end Tc. Since the narrow groove depth 30d is deeper than the main groove depth $10d_2$, it is possible to match the remaining depth of the narrow groove 30 with that of the main groove 10 even if the tire tread is worn away in step-down abrasion fashion (i.e. the tread end rib is easily worn away).

Further, since the narrow groove 30 is formed being inclined inward (toward the tire central line CL), it is possible to reduce the rigidity of the inner rib 20u therefore to improve the irregular abrasion resistance on an end portion of the rib 20u at which the narrow groove 30 is formed.

Furthermore, since the depth $10d_2$ of the main groove $10_2$ is larger than that $10d_1$ of the main groove $10_1$, it is possible to obtain an adequate groove depth proportion on the tread after the tread has been worn away to some extent; that is, an economical tread pattern.

Further, the narrow groove 30 serves to confine the occurence of shoulder abrasion in the outermost rib 20o and to restrict the extension of shoulder abrasion toward the inner rib 20u.

The narrow groove 30 is formed within a range of 10 to 50% of the rib width 20w between the outermain groove $10_2$ and the tread end.

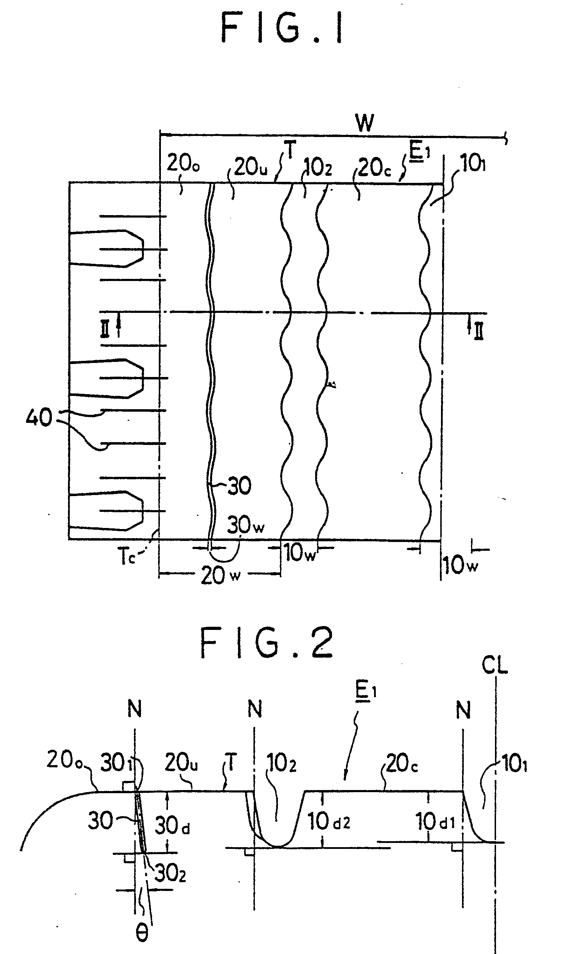

In the case where the irregular abrasion resistance is severely requested, it is preferable to arrange the narrow groove 30 continuously in the circumferential direction as shown in Figs. 1 and 2.

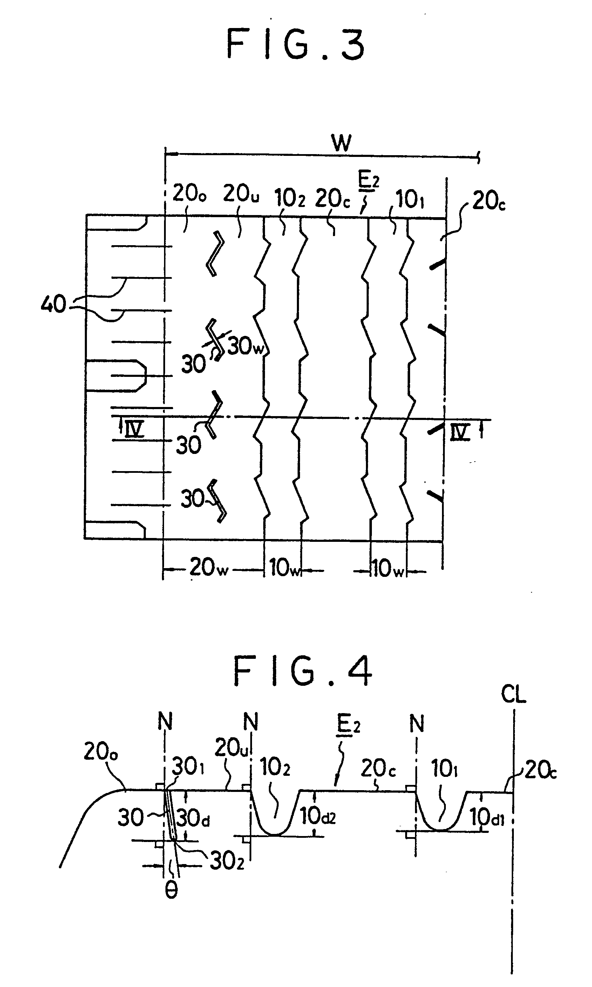

Figs. 3 and 4 show the second embodiment, in which the narrow groove 30 is arranged intermittently in the circumferential direction. The ribs 20u and 20o are formed integral in the axial direction at the discontinuous portions in this embodiment, although the irregular abrasion resistance is partial, this is preferable from the standpoint of tire life where the irregular abrasion resistance is not severely requested.

Further, it is preferable to arrange the continuous narrow groove 30 on the outward tread and the non-continuous narrow groove 30 on the inward tread when the tire is mounted on a vehicle.

The narrow groove 30 is formed with a width narrow enough to such an extent that both the sidewalls of the groove are brought into contact with each other when a heavy load is applied to the tire.

Further, in Figs. 1 and 3, the reference numeral 40 denotes sipes. The sipes may be arranged in the ribs 20c, 20u and 20o, without disturbing the continuity of the outermost rib 20u along the circumferential direction.

Further, the tread end Tc implies a position at which the tread is in contact with the ground when a predetermined load is applied to the tire. In the case of a round-shoulder tire, this tread end becomes a cardinal point of tire dimensions.

(Experiment Examples)

To verify the effect of the present invention, the following tests have been made.

Running test was made under various test conditions by mounting 50 tires of each of the following three kinds on track front wheels for actual travel test. Tires of the same kind were mounted on the front wheels of the same vehicle.

Further, the evaluation was made on the basis of the following two standards, because tires mounted on the front wheels were often removed when irregular abrasion exceeded a predetermined level.

(1) Travel distance to when tires were removed on user's judgment.

(2) Travel distance to when the depth of the main groove at the tire middle position decreased down to 3.0 mm.

(Invention Tires 1)

\* Tire size:     12R 22.5 (Tires for track)
\* Structure:     The same as the first embodiment shown in Figs. 1 and 2

```
*  Dimensions: Tread width W ------------- 200 mm

               Main groove depth 10d₁ ---- 14.5 mm

               Main groove depth 10d₂ ---- 15.0 mm

               Narrow groove depth 30d --- 15.5 mm

               Main groove width 10w ----- 13.0 mm

               Narrow groove width 30w --- 1.2 mm

               Narrow groove inclination angle θ --- 2°
```

(Invention Tires 2)

* Tire size:     295/75R 22.5 (Tires for Track)
* Structure:    The same as the second embodiment shown in Figs. 3 and 4

```
*   Dimensions: Tread width W ------------- 200 mm
                Main groove depth 10d₁ ---- 13.2 mm
                Main groove depth 10d₂ ---- 14.0 mm
                Narrow groove depth 30d --- 14.2 mm
                Main groove width 10w ----- 13.5 mm
                Narrow groove width 30w --- 1.2 mm
                Narrow groove inclination angle θ --- 2°
```

(Comparative Tires)

* Tire size:     12R 22.5 (Tires for Track)
* Structure:    The same as the first embodiment shown in Fig. 1 (only in plane view)

```
*   Dimensions: Tread width W ------------- 200 mm
                Main groove depth 10d₁ ---- 15.0 mm
                Main groove depth 10d₂ ---- 15.0 mm
                Narrow groove depth 30d --- 15.0 mm
                Main groove width 10w ----- 13.0 mm
                Narrow groove width 30w --- 1.2 mm
                Narrow groove inclination angle θ --- -6°
```

(Test Results)

(Invention Tires 1)

It was confirmed that tread life can be improved by 30% in the invention tires 1 as compared with the comparative tires.

Further, tread life was extremely shortened due to irregular abrasion in some comparative tires according to the travel conditions. However, in the invention tires, tread life dispersion was small against various travel conditions without producing extremely short tread life. That is, the tread life of the invention tires was not subjected to the travel conditions.

Rib tear resistance was evaluated by the following method; a rib-tear promoting road surface where 4-inch high projections were arranged was formed on a test course; vehicles traveled 36 times over the rib-tear promoting road at a very slow speed whenever the vehicles had traveled a predetermined distance at a speed of 60 mile per hour on the ordinary test course; thereafter, rib-tear trouble and crack length at the narrow groove bottom were checked for evaluation.

As this test result, rib tear trouble occured or long rib-tears were found in the comparative tires. In contrast with this, no rib tear trouble was found and crack length were short in the invention tires 1.

(Invention tire 2)

It was confirmed that under non-severe travel conditions, shoulder abrasion of the invention tires 2 was small and the abrasion life was improved as compared with the invention tire 1.

Further, the rib-tear resistance was high in the case of the intermittent narrow grooves.

EP 0 256 247 B1

(Effect of the Invention)

Since the tires of the present invention were constructed as described above, it is possible to markedly improve the rib-tear resistance and the abrasion resistance or abrasion life of pneumatic radial tires for heavy load-duty vehicles such as tracks, buses, etc.

## Claims

1. A pneumatic radial tire for heavy-duty road vehicle, comprising a plurality of main grooves (10) extending substantially in a tire circumferential direction, a plurality of ribs (20) partitioned by the main grooves, and two narow grooves (30) having a width such that both its sidewalls are in contact with each other under load and arranged within a range of 10 to 50% of an outer rib width (20w) from each tread end (Tc) and extending also substantially in the tire circumferential direction, at least one of said two narrow grooves being inclined at an angle $\theta$ with respect to a normal (N) built up at the opening portion $(30_1)$ on the tread surface in cross section including the tire rotational axis, characterized in that the depth (30d) of said narrow grooves (30) is greater than the maximum depth $(10d_2)$ of said main grooves (10), and in that said narrow grooves (30) are inclined toward the tread center (CL).

2. The pneumatic radial tire as set forth in claim 1, wherein the angle $\theta$ is 10 degrees or less.

3. The pneumatic radial tire as set forth in claim 1, wherein the depth $(10d_2)$ of the outer main groove $(10_2)$ is greater than that $(10d_1)$ of the inner main groove $(10_1)$, but smaller than the depth (30d) of said narrow groove (30).

4. A vehicle provided with the pneumatic radial tire as set forth in claim 1, wherein at least one of said narrow grooves (30) is continuously formed along the outward tread end of the tire mounted on the vehicle.

5. A vehicle provided with the pneumatic radial tire as set forth in claim 1, wherein at least one of said narrow grooves (30) is intermittently formed along the inward tread end of the tire mounted on the vehicle.

## Patentansprüche

1. Luftreifen in radialer Bauweise für Lastkraftwagen mit einer Mehrzahl von Hauptrillen (10), die sich im wesentlichen in Radumfangsrichtung erstrecken, einer Mehrzahl von Rippen (20), die durch die Hauptrillen unterteilt sind, und zwei engen Rillen (30), die eine Breite derart aufweisen, daß beide ihrer Seitenwände unter Last in Berührung miteinander sind, und in einem Bereich von 10 bis 50 % der äußeren Rippenbreite (20w) von jedem Lauffflächenende (Tc) angeordnet sind und ebenfalls im wesentlichen in Reifenumfangsrichtung sich erstrecken, wobei wenigstens eine der beiden engen Rillen um einen Winkel $\theta$ bezüglich einer Senkrechten (N) geneigt ist, die am Öffnungsbereich $(30_1)$ auf der Laufflächenoberfläche im Querschnitt aufgebaut ist, die die Reifendrehachse umfaßt, **dadurch gekennzeichnet**, daß die Tiefe (30d) der engen Rillen (30) größer ist als die maximale Tiefe $(10d_2)$ der Hauptrillen (10), und daß die engen Rillen (30) zu dem Laufflächenmittelpunkt (CL) geneigt sind.

2. Luftreifen in Radialbauweise nach Anspruch 1, wobei der Winkel $\theta$ 10° oder weniger beträgt.

3. Luftreifen in Radialbauweise nach Anspruch 1, wobei die Tiefe $(10d_2)$ der äußeren Hauptrille $(10_2)$ größer ist als jene $(10d_1)$ der inneren Hauptrille $(10_1)$, jedoch geringer ist als die Tiefe (30d) der engen Rille (30).

4. Fahrzeug, versehen mit dem Luftreifen in Radialbauweise, nach Anspruch 1, wobei wenigstens eine der engen Rillen (30) kontinuierlich entlang des äußeren Laufflächenendes des Reifens ausgebildet ist, der an dem Fahrzeug montiert ist.

5. Fahrzeug, versehen mit dem Luftreifen in Radialbauweise, nach Anspruch 1, wobei wenigstens eine der engen Rillen (30) absatzweise entlang des inneren Laufflächenendes des an dem Fahrzeug montierten Reifens ausgebildet ist.

## Revendications

1. Pneumatique à carcasse radiale pour poids lourds routiers, comprenant plusieurs gorges principales (10) disposées pratiquement dans la direction circonférentielle du pneumatique, plusieurs nervures (20) séparées par les gorges principales, et deux gorges étroites (30) ayant une largeur telle que les deux parois latérales d'une gorge sont en contact mutuel lorsqu'une charge est appliquée et qui sont disposées à une distance de 10 à 50 % de la largeur (20w) de la nervure externe par rapport à chaque extrémité de bande de roulement

6

(Tc) et sont aussi orientées pratiquement dans la direction circonférentielle du pneumatique, l'une au moins des deux gorges étroites étant inclinée d'un angle $\theta$ par rapport à une normale (N) passant dans la partie d'ouverture ($30_1$) de la surface de la bande de roulement, en coupe comprenant l'axe de rotation du pneumatique, caractérisé en ce que la profondeur (30d) des gorges étroites (30) est supérieure à la profondeur maximale ($10d_2$) des gorges principales (10), et en ce que les gorges étroites (30) sont inclinées vers le centre (CL) de la bande de roulement.

2. Pneumatique à carcasse radiale selon la revendication 1, dans lequel l'angle $\theta$ est inférieur ou égal à 10°.

3. Pneumatique à carcasse radiale selon la revendication 1, dans lequel la profondeur ($10d_2$) de la gorge principale externe ($10_2$) est supérieure à celle ($10d_1$) de la gorge principale interne ($10_1$), mais est inférieure à la profondeur (30d) de la gorge étroite (30).

4. Véhicule muni du pneumatique à carcasse radiale selon la revendication 1, dans lequel l'une des gorges étroites (30) au moins est formée de façon continue à l'extrémité externe de la bande de roulement du pneumatique monté sur le véhicule.

5. Véhicule muni du pneumatique à carcasse radiale selon la revendication 1, dans lequel l'une au moins des gorges étroites (30) est intermittente le long de l'extrémité interne de la bande de roulement du pneumatique monté sur le véhicule.

# F I G . 1

# F I G . 2

# F I G . 3

# F I G . 4